# EUROPÄISCHE PATENTANMELDUNG

(11) **EP 1 338 950 A2**
(43) Veröffentlichungstag der Anmeldung: **27.08.2003**
(21) Anmeldenummer: 03001805.5
(22) Anmeldetag: 29.01.2003
(51) Int. Cl.: G06F 3/033

(54) **Verfahren zur Selektion und Darstellung von Objekten in der Ebene und im N-dimensionalen Raum**

(30) Priorität: 21.02.2002 DE 10207185
(71) Anmelder: KID-Systeme GmbH, 21614 Buxtehude (DE)
(72) Erfinder: von Essen, Hartwig, Dr., 21614 Buxtehude (DE); Günthner, Heiko, 21149 Hamburg (DE); Endress, Manfred, 21614 Buxtehude (DE); Kuhlmann, Holger, 21732 Krummendeich (DE); Franzrahe, Oliver, 21143 Hamburg (DE)
(74) Vertreter: Hansmann, Dierk, Dipl.-Ing.

(57) **Zusammenfassung**

Es wird ein Verfahren zur Selektion und Darstellung von Objekten in der Ebene und/oder im N-dimensionalen Raum in einer beliebigen Konfiguration bzw. Anordnung, insbesondere zur Selektion von Einbauten und Funktionsgruppen in Fahrzeugen vorgeschlagen.

Hierzu ist vorgesehen, daß zur elektronisch unterstützen Selektion und Darstellung über die zu selektierenden und darzustellenden Objekte eine Matrix mit m Zeilen und n Spalten gelegt wird, mit der alle Objekte weitestgehend realitätsnah positioniert werden und zur Selektion und Darstellung eines Objektes ein Feld oder mehrere Felder der Matrix ganz oder teilweise genutzt werden.

## Beschreibung

Die Erfindung betrifft ein Verfahren zur Selektion und Darstellung von Objekten in der Ebene und/oder im N-dimensionalen Raum in einer beliebigen Konfiguration bzw. Anordnung, insbesondere zur Selektion von Einbauten und Funktionsgruppen in Fahrzeugen.

Für verschiedene Anwendungen ist es bekannt, eine Bedienung durch den Benutzer mit dem Finger per "Touch", mit einer Maus, einem Datenhandschuh oder Ähnlichem durchzuführen. Ein Touch-Interface ermöglicht beispielsweise das Betätigen von Schaltern, die auf einem Display dargestellt werden. Ein Betätigen von mehreren Schaltern erfolgt i.d.R. durch mehrere "Touches".

Es ist Aufgabe der Erfindung, ein Verfahren zu schaffen, um mit wenigen Selektionen wie durch Touch-Bedienung mehrere Objekte auszuwählen und entsprechend einer Bedienung mit einer Maus zu ermöglichen, indem ein rechteckiges Feld aufziehbar ist. Es soll die Darstellung der auswählbaren Objekte entsprechend der Konfiguration bzw. Anordnung der Objekte in der Ebene oder im N-dimensionalen Raum automatisiert und eine optimale Darstellung sowie Selektion einer Vielzahl von möglichen Konfigurationen berücksichtigt werden. Ferner besteht die Aufgabe, eine ergonomische Selektion einer Gruppe von Objekten zu ermöglichen und gleichzeitig eine optimale, automatisch an die Anordnung der Objekte angepaßte realitätsnahe Darstellung zu erreichen.

Die Aufgabe wird erfindungsgemäß dadurch gelöst, daß zur elektronisch unterstützten Selektion und Darstellung über die zu selektierenden und darzustellenden Objekte eine Matrix mit m Zeilen und n Spalten gelegt wird, mit der alle Objekte weitestgehend realitätsnah positioniert werden und zur Selektion und Darstellung eines Objektes mindestens ein Feld der Matrix ganz oder teilweise genutzt werden.

Hierdurch wird über eine beliebige Konfiguration bzw. Anordnung darzustellender und zu selektierenden Objekten eine Matrix mit m Zeilen und n Spalten gelegt, mit der alle Objekte weitestgehend realitätsnah positionierbar sind.

Erfindungsgemäße Ausgestaltungen und vorteilhafte Weiterbildungen sind durch Merkmale der Unteransprüche gekennzeichnet.

In den Zeichnungen sind Ausführungsbeispiele der Erfindung dargestellt. Es zeigen:
- Fig. 1: ein Feld mit einzelnen Matrix-Feldern mit einer vollen Nutzung für die Darstellung,
- Fig. 2: ein Feld mit einzelnen Matrix-Feldern mit einer partiellen Nutzung für die Darstellung,
- Fig. 3: mehrere Matrix-Felder mit einer voll oder partiellen Nutzung für die Darstellung innerhalb einer Zeile,
- Fig. 4: mehrere Matrix-Felder mit einer voll oder partiellen Nutzung für eine Darstellung innerhalb einer Spalte,
- Fig. 5: mehrere Matrix-Felder mit einer zeilen- und spaltenübergreifenden vollen oder teilweisen Nutzung für eine Darstellung,
- Fig. 6: eine Matrix mit unterschiedlichen Spaltenbreiten und unterschiedlichen Zeilenhöhen und abweichend Spaltenkennzeichnung sowie Zuordnung zu Pixelspalten eines Displays,
- Fig. 7: eine Ausführung für die Definition eines Rechtecks mit zwei selektierten Feldern, wobei das Rechteck die selektierten Felder einschließt,
- Fig. 8: eine andere Ausführung gemäß Fig. 7,
- Fig. 9: eine weitere Ausführung für die Definition eines Rechtecks mit zwei selektieren Feldern, wobei die selektierten Felder außerhalb des Rechtecks liegen,
- Fig. 10: eine andere Ausführung gemäß Fig. 9,
- Fig. 11: eine Darstellung für eine Variante zur Festlegung der durch das Rechteck selektierten Objekte, die komplett im selektierten Objekte, die komplett im Rechteck liegen,
- Fig. 12: eine zweite Variante gemäß Fig. 10 wobei alle Objekte, die komplett oder teilweise im Rechteck liegen selektiert werden,
- Fig. 13: eine dritte Variante gemäß Fig. 10, wobei alle Objekte, die komplett oder teilweise im Rechteck liegen bzw. die direkt am Rechteck angrenzen, werden selektiert.

Bei den Ausführungen wird zur Darstellung eines Objektes ein Feld der Matrix ganz oder teilweise genutzt. Die Höhe der Zeilen und die Breite der Spalten ist beliebig. Auch innerhalb einer Matrix kann es Spalten mit unterschiedlichen Breiten und/oder Zeilen mit unterschiedlichen Höhen geben. Auch ist es vorgesehen, daß zur Darstellung eines Objektes mehrere Spalten oder/und mehrere Zeilen ganz oder teilweise genutzt werden.

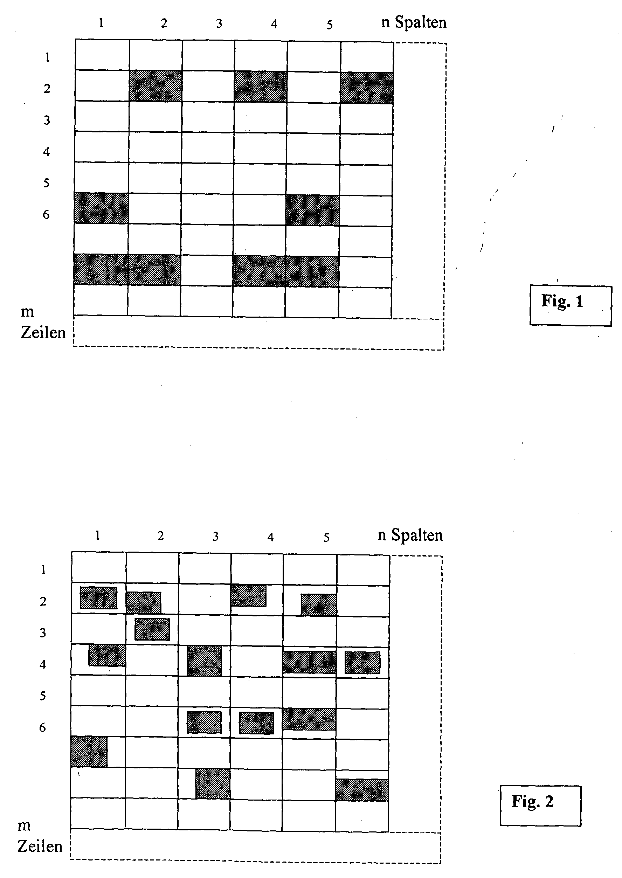

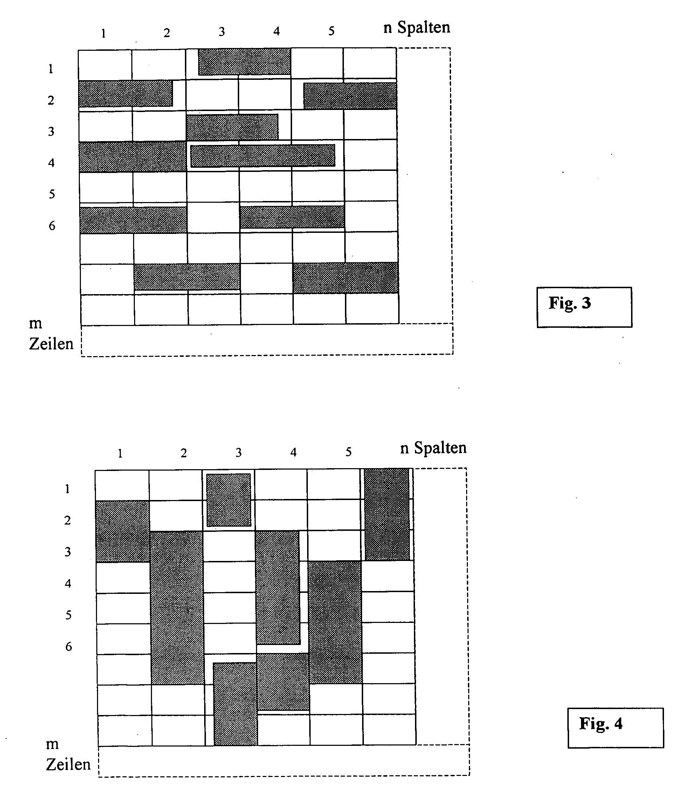

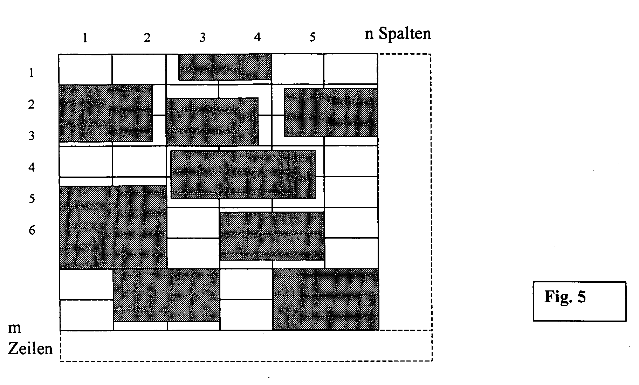

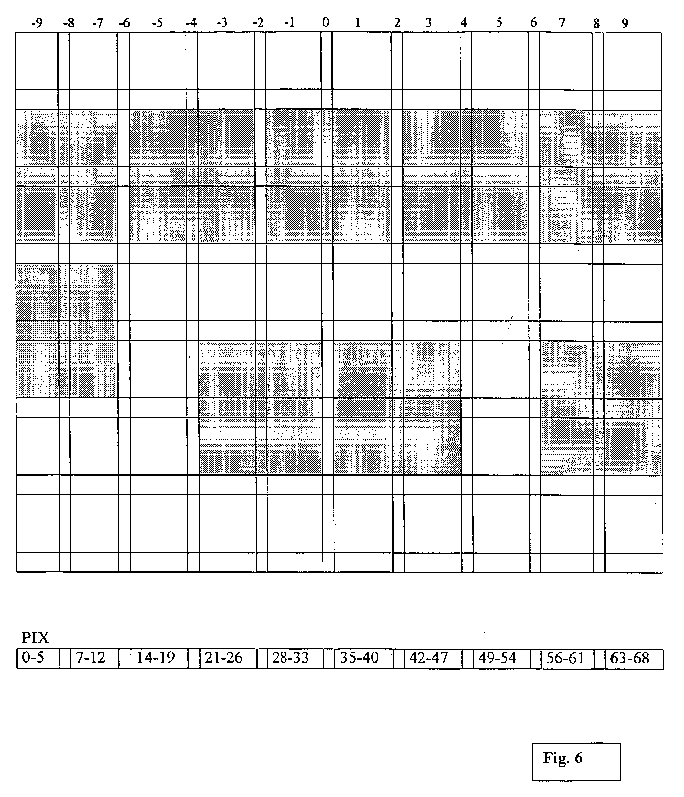

Es wird zur Darstellung des Objektes ein Matrix-Feld oder es werden mehrere Matrix-Felder nur teilweise genutzt, dann ist die Positionierung innerhalb des Matrix-Feldes bzw. der Matrix-Felder beliebig. Auch kann der Anteil der zur Darstellung genutzten Matrix-Feldfläche bzw. Matrix-Feldflächen beliebig zwischen 0 und 100% sein. Auch ist die Beschriftung oder Numerierung der Matrixzeilen und -spalten beliebig. Diese Ausbildungen sind in den Bilddarstellungen Fig. 1 - 6 beispielhaft gezeigt.

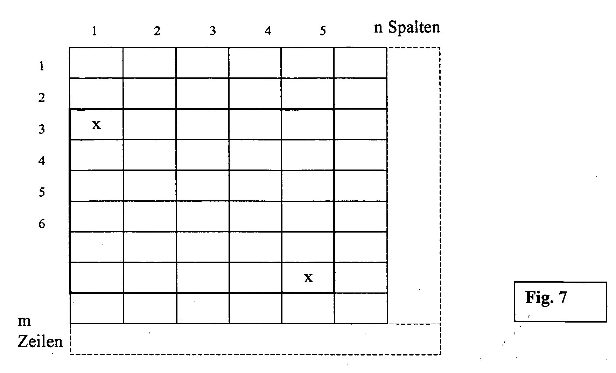

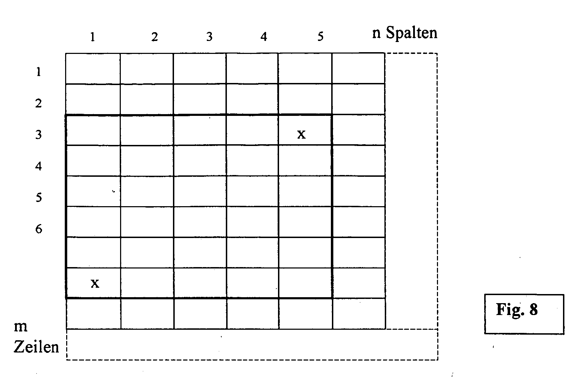

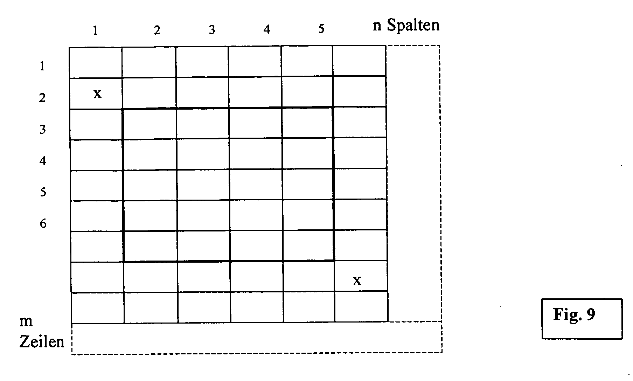

Gemäß Fig. 7 - 10 sind Ausführungen zur Selektion eines Rechtecks dargestellt. Hierbei sind zur blockweisen Selektion von mehreren Objekten (n1 Komponenten oder Funktionsgruppen; mit n1 > 1) anstelle von n1 Selektionen nur 2 bis n2 Selektionen erforderlich (mit n2 < n1).

Für das Selektionsverfahren mit 2 Selektionen sind zwei diagonal zueinander liegende Eck-Matrixfelder des auszuwählenden Blocks von Objekten zu selektieren, beispielsweise per 2 "Touches". Mit Hilfe der 2 Selektionen wird ein Rechteck definiert.

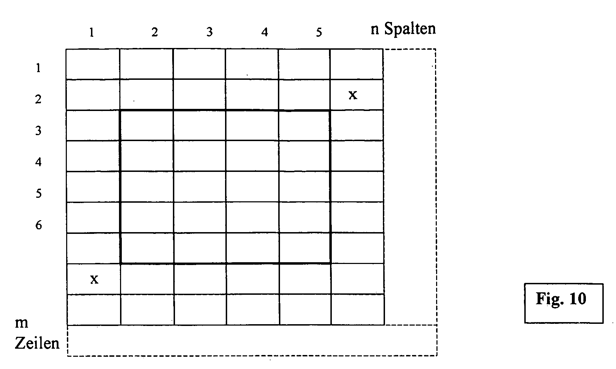

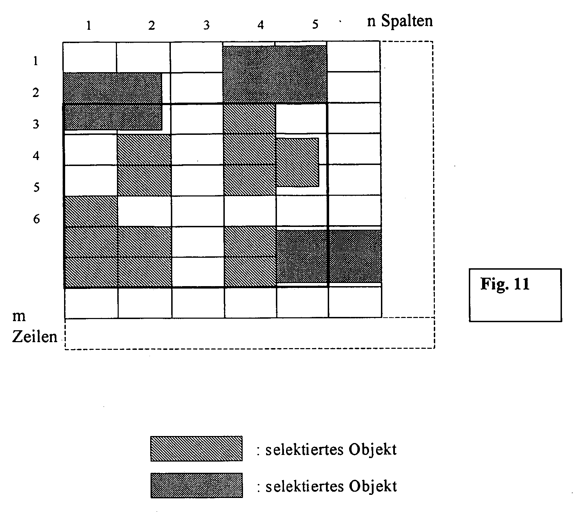

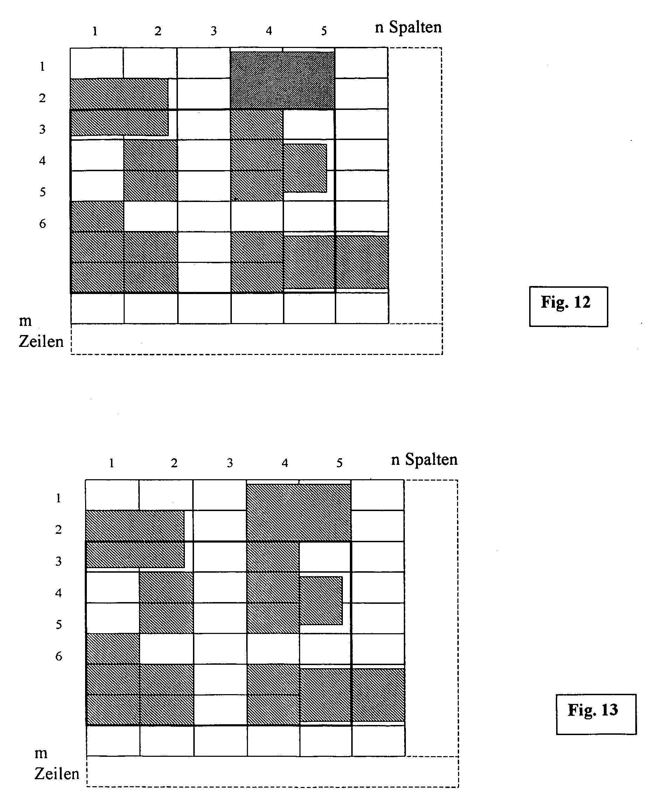

Ferner ist gemäß Fig. 10 - 12 eine Verkettung von mehreren Gruppen- und Einzelselektionen ausgeführt.

Die Selektion von Gruppen und/oder einzelnen Objekten kann n3-fach nacheinander durchgeführt werden, um verschiedene Gruppen und auch zusätzlich einzeln zu selektierende Objekte zu einer Summenselektion zusammenzufassen. Wie hierbei dargestellt ist, gibt es für die Festlegung der durch das Rechteck selektierten Objekte mehrere Varianten.
- Variante 1:: Alle Objekte, die komplett im Rechteck liegen werden selektiert.
- Variante 2:: Alle Objekte, die komplett oder teilweise im Rechteck liegen werden selektiert.
- Variante 3:: Alle Objekte, die komplett oder teilweise im Rechteck liegen werden oder die direkt am Rechteck angrenzen werden selektiert.

Weitere Varianten für die Festlegung der durch das Rechteck selektierten Objekte bestehen beispielsweise darin, daß alle durch ein Objekt vollständig oder partiell genutzten Matrixfelder, die komplett im Rechteck liegen selektiert werden. Ferner ist vorgesehen, daß alle durch ein Objekt vollständig oder partiell genutzten Matrixfelder, die komplett oder teilweise im Rechteck liegen selektiert werden oder alle durch ein Objekt vollständig oder partiell genutzten Matrixfelder, die komplett oder teilweise im Rechteck liegen werden oder die direkt am Rechteck angrenzen selektiert werden.

Bei einer Anwendung des Verfahrens auf die Selektion eines Nl-Ecks läßt sich das gleiche Verfahren genauso anwenden, indem durch 2 Selektionen eine Zeile selektiert wird (kleines Rechteck), indem durch 3 Selektionen ein Dreieck selektiert wird, indem durch 4 Selektionen ein Viereck selektiert wird und indem durch N1 Selektionen ein N1-Eck selektiert wird.

Eine automatisierte Anwendung des Verfahrens für unterschiedliche Anordnungen von Objekten bzw. Konfigurationen werden dadurch automatisch dargestellt, daß es für jede Konfiguration eine Zuordnung von Objekten zu Matrixfeldern gibt, die entsprechend durch maschinelle Auswertung automatisch auf der Bedieneroberfläche dargestellt und selektiert werden können.

Dieses Prinzip läßt sich äquivalent auch in einen N-dimensionalen Raum übertragen und anwenden.

## Patentansprüche

1. Verfahren zur Selektion und Darstellung von Objekten in der Ebene und/oder im N-dimensionalen Raum in einer beliebigen Konfiguration bzw. Anordnung, insbesondere zur Selektion von Einbauten und Funktionsgruppen in Fahrzeugen, **dadurch gekennzeichnet, daß** zur elektronisch unterstützen Selektion und Darstellung über die zu selektierenden und darzustellenden Objekte eine Matrix mit m Zeilen und n Spalten gelegt wird, mit der alle Objekte weitestgehend realitätsnah positioniert werden und zur Selektion und Darstellung eines Objektes ein Feld oder mehrere Felder der Matrix ganz oder teilweise genutzt werden.

2. Verfahren nach Anspruch 1, **dadurch gekennzeichnet, daß** die Höhe der Zeilen und die Breite der Spalten beliebig ist

3. Verfahren nach Anspruch 1 oder 2, **dadurch gekennzeichnet, daß** innerhalb einer Matrix Spalten mit unterschiedlichen Breiten und/oder Zeilen mit unterschiedlichen Höhen vorhanden sind.

4. Verfahren nach einem der Ansprüche 1 bis 3,
**dadurch gekennzeichnet, daß** die Beschriftung oder Numerierung der Matrixzeilen und -spalten so gewählt wird, daß eine maschinelle Verarbeitung möglich ist.

5. Verfahren nach einem der Ansprüche 1 bis 4,
**dadurch gekennzeichnet, daß** der Anteil der zur Darstellung genutzten Matrix-Feldfläche bzw. Matrix-Feldflächen beliebig zwischen 0 und 100% ist.

6. Verfahren nach einem der Ansprüche 1 bis 5,
**dadurch gekennzeichnet, daß** in dem Fall, daß zur Darstellung des Objektes ein Matrix-Feld oder mehrere Matrix-Felder nur teilweise genutzt werden, die Positionierung innerhalb des Matrix-Feldes bzw. der Matrix-Felder beliebig ist.

7. Verfahren nach einem der Ansprüche 1 bis 6,
**dadurch gekennzeichnet, daß** zur blockweisen Selektion von mehreren bzw. n1 Objekten (n1 Komponenten oder Funktionsgruppen; mit n1 > 1) anstelle von n1 Selektionen nur 2 bis n2 Selektionen erforderlich sind (mit n2 < n1).

8. Verfahren nach Anspruch 7, **dadurch gekennzeichnet, daß** eine Selektion von n1 Objekten, die in einer Matrix dargestellt werden, durch Anwahl von 2 diagonal zueinander liegenden Eckpunkten geschieht, die ein Rechteck definieren.

9. Verfahren nach Anspruch 8, **dadurch gekennzeichnet, daß** für die Definition eines Rechtecks zur Selektion von n1 Objekten zwei diagonal zueinander liegende Matrixfelder selektiert werden, die zwei diagonal zueinander liegende Ecken des Rechtecks markieren..

10. Verfahren nach Anspruch 9, **dadurch gekennzeichnet, daß** die selektierten diagonal zueinander liegende Matrixfelder innerhalb oder außerhalb des Rechtecks liegen.

11. Verfahren nach Anspruch 10, **dadurch gekennzeichnet, daß** alle Objekte, die komplett im Rechteck liegen selektiert werden.

12. Verfahren nach Anspruch 10, **dadurch gekennzeichnet, daß** alle Objekte, die komplett oder teilweise im Rechteck liegen selektiert werden.

13. Verfahren nach Anspruch 10, **dadurch gekennzeichnet, daß** alle Objekte, die komplett oder teilweise im Rechteck liegen oder die direkt am Rechteck angrenzen selektiert werden.

14. Verfahren nach Anspruch 10, **dadurch gekennzeichnet, daß** alle durch ein Objekt vollständig oder partiell genutzten Matrixfelder, die komplett im Rechteck liegen selektiert werden.

15. Verfahren nach Anspruch 10, **dadurch gekennzeichnet, daß** alle durch ein Objekt vollständig oder partiell genutzten Matrixfelder, die komplett oder teilweise im Rechteck liegen selektiert werden.

16. Verfahren nach Anspruch 10, **dadurch gekennzeichnet, daß** alle durch ein Objekt vollständig oder partiell genutzten Matrixfelder, die komplett oder teilweise im Rechteck liegen werden oder die direkt am Rechteck angrenzen selektiert werden.

17. Verfahren nach einem der Ansprüche 10 bis 16, **dadurch gekennzeichnet, daß** die Selektion von Gruppen und/oder einzelnen Objekten n3-fach nacheinander durchgeführt wird, um verschiedene Gruppen und auch zusätzlich einzeln zu selektierende Objekte zu einer Summenselektion zusammenzufassen.

18. Verfahren nach einem der Ansprüche 10 bis 16, **dadurch gekennzeichnet, daß** durch 2 Selektionen eine Zeile selektiert wird (kleines Rechteck), daß durch 3 Selektionen ein Dreieck selektiert wird, daß durch 4 Selektionen ein Viereck selektiert wird, und daß durch N1 Selektionen ein N1-Eck selektiert wird.

19. Verfahren nach einem der Ansprüche 10 bis 16, **dadurch gekennzeichnet, daß** unterschiedliche Anordnungen von Objekten bzw. Konfigurationen dadurch automatisch dargestellt werden, daß es für jede Konfiguration eine Zuordnung von Objekten zu Matrixfeldern gibt, die entsprechend durch maschinelle Auswertung automatisch auf der Bedieneroberfläche dargestellt und selektiert werden können.

20. Verfahren nach einem der Ansprüche10 bis 16, **dadurch gekennzeichnet, daß** sich das Verfahren sich äquivalent in einen N-dimensionalen Raum übertragen und anwenden läßt.
